**Europäisches Patentamt**

**European Patent Office**

**Office européen des brevets**

(11) Numéro de publication: **0 190 598**
**B1**

(12) **FASCICULE DE BREVET EUROPEEN**

(45) Date de publication du fascicule du brevet:
**02.11.89**

(21) Numéro de dépôt: **86100710.2**

(22) Date de dépôt: **21.01.86**

(51) Int. Cl.⁴: **H02G 1/08,** H02G 9/10

(54) **Procédé de pose de câble en canalisations reparties en tronçons et dispositif de mise en oeuvre.**

(30) Priorité: **22.01.85 FR 8500860**

(43) Date de publication de la demande:
**13.08.86 Bulletin 86/33**

(45) Mention de la délivrance du brevet:
**02.11.89 Bulletin 89/44**

(84) Etats contractants désignés:
**BE CH DE FR IT LI**

(56) Documents cités:
**DE-A- 3 019 667**
**GB-A- 424 474**
**US-A- 3 971 544**

(73) Titulaire: **LES CABLES DE LYON Société anonyme dite:,
170 quai de Clichy, F-92111 Clichy Cedex(FR)**

(72) Inventeur: **Duplaine, René, 29, avenue Christiane,
F-78700 Conflans Sainte Honorine(FR)**
Inventeur: **Hoebeke, Jean-Claude, 4, Allée des
Narcisses, F-95520 Osny(FR)**
Inventeur: **Schiehle, Philippe, 37, avenue du Maréchal
Galliéni, F-78700 Conflans Sainte Honorine(FR)**

(74) Mandataire: **Weinmiller, Jürgen et al,
Lennéstrasse 9 Postfach 24, D-8133 Feldafing(DE)**

## Description

La présente invention concerne un procédé de pose de câble dans des canalisations ou fourreaux comportant des sections distinctes séparées par des chambres d'accès, notamment des câbles de transmissions d'informations par fibres optiques.

Des réseaux câblés comportant ce type de câbles sont en général divisés en sections. Le plus souvent la pose ne peut s'effectuer à l'air libre. Il est nécessaire de faire passer les câbles dans des canalisations ou fourreaux qui sont divisées en section, deux sections successives débouchent dans une chambre de visite accessible.

Il n'est naturellement pas possible de faire glisser ces câbles, en les poussant, directement dans une canalisation qui, le plus souvent, présente des coudes pour éviter divers obstacles ou suivre le tracé de voies préétablies. En effet, ces câbles ont typiquement une longueur supérieure à 300 m. Il est nécessaire de les tirer.

Selon une technique de pose couramment mise en oeuvre, il est prévu une première phase consistant en l'introduction d'un dispositif appelé furet à l'une des extrémités d'une canalisation, entraînant un filin suffisamment léger.

L'avance de ce dispositif est obtenue par l'introduction dans la canalisation d'air comprimé. Le dispositif est récupéré, avec le filin qui lui est fixé, à l'autre extrémité de la canalisation, c'est-à-dire précisément dans une des chambres précitées. Ce filin, dont l'une des extrémités est disponible au début de la canalisation, est utilisé pour tirer un second filin, de diamètre plus important, qui à son tour est utilisé pour tracter le câble à poser proprement dit.

Il y a donc, en résumé, des opérations d'aiguillage (du furet), de tirage et de guidage.

Pour assurer la continuité de cheminement entre deux sections de fourreaux successives, la technique actuelle consiste en la mise en oeuvre d'un jeu de galets reliant les embouchures des deux fourreaux. Ces dispositifs sont d'un poids non négligeable et complexes de mise en oeuvre (ensemble de pièces articulées dans l'espace). En effet, les embouchures peuvent être situées à des niveaux différents et les directions des extrémités des fourreaux ne sont pas obligatoirement parallèles entre elles. De plus, s'ils peuvent assurer dans une certaines mesure le passage du câble en cours de tirage, c'est-à-dire le guidage de ce câble d'une embouchure à une autre, ils ne peuvent assurer l'aiguillage du furet dont l'avance est assurée pneumatiquement. Il est nécessaire de réintroduire celui-ci dans la section de fourreau suivante et de disposer d'un dispositif compresseur au niveau de cette embouchure.

L'invention vise à pallier les inconvénients de l'art connu. Elle s'applique à toutes les opérations de pose qui viennent d'être définies et, en particulier, à l'opération d'aiguillage. Le procédé selon l'invention est simple de mise en oeuvre et ne nécessite que des moyens peu coûteux.

En outre, un premier document GB 424 474 décrit un système de câble électrique, pour la transmisson souterraine d'énergie électrique, comprenant un tube contenant ce câble et un liquide d'isolation, dans lequel une structure gouttière ondulée ou inclinée est disposée sous le tube et sert à transporter le liquide sortant du tube vers une fosse disposée en un point bas de la structure gouttière.

Un second document US 3 971 544 décrit un appareil pour guider une tige dans un conduit; à partir d'un touret situé loin de ce conduit, qui est formé d'un support allongé dont l'une des extrémités est montée au voisinage de l'extrémité de la tige, lorsqu'il est complètement enroulé sur le touret. L'autre extrémité du support est adaptée pour recevoir et soutenir un conduit de guidage s'étendant entre le support et le conduit dans lequel doit être insérée la tige. Un fourreau prolongeant la longueur du support est monté de façon amovible de telle façon que le support et le fourreau forment une extension du conduit de guidage pour guider l'extrémité de la tige dans le conduit lorsque ledit appareil est en position non enroulé sur le touret.

L'invention a donc objet un procédé de pose de câble de transmission dans des canalisations comportant deux tronçons distincts ayant leurs embouchures dans une chambre d'accès commune, le procédé comprenant au moins une étape de tirage d'un câble de transmission à l'aide d'un câble de tirage à travers ces deux tronçons, caractérisé en ce qu'il comprend une étape préliminaire à l'étape de tirage, de disposition d'un tube flexible dans ladite chambre d'accès, ce tube ayant ses extrémités emboîtées chacune dans l'une des embouchures des tronçons de canalisation de manière à former un chemin de guidage continu entre ces embouchures et une étape de dépose du tube flexible après l'étape de tirage.

L'invention a encore pour objet un dispositif pour la mise en oeuvre du procédé.

L'invention sera mieux comprise et d'autres avantages et particularités apparaîtront à l'aide de la description qui suit et des figures annexées parmi lesquelles:

– les figures 1 et 2 illustrent schématiquement un dispositif de mise en oeuvre du procédé de l'invention selon une variante préférée,

-les figures 3 et 4 représentent des détails du dispositif,

-la figure 5 illustre les opérations effectuées pendant la dernière étape du procédé de l'invention selon cette variante,

-la figure 6 illustre un dispositif pour la mise en oeuvre du procédé selon une variante supplémentaire de réalisation.

Dans une variante préférée qui va maintenant être décrite, les opérations d'aiguillage et de guidage lors des tirages sont toutes deux rendues possibles par le procédé de l'invention.

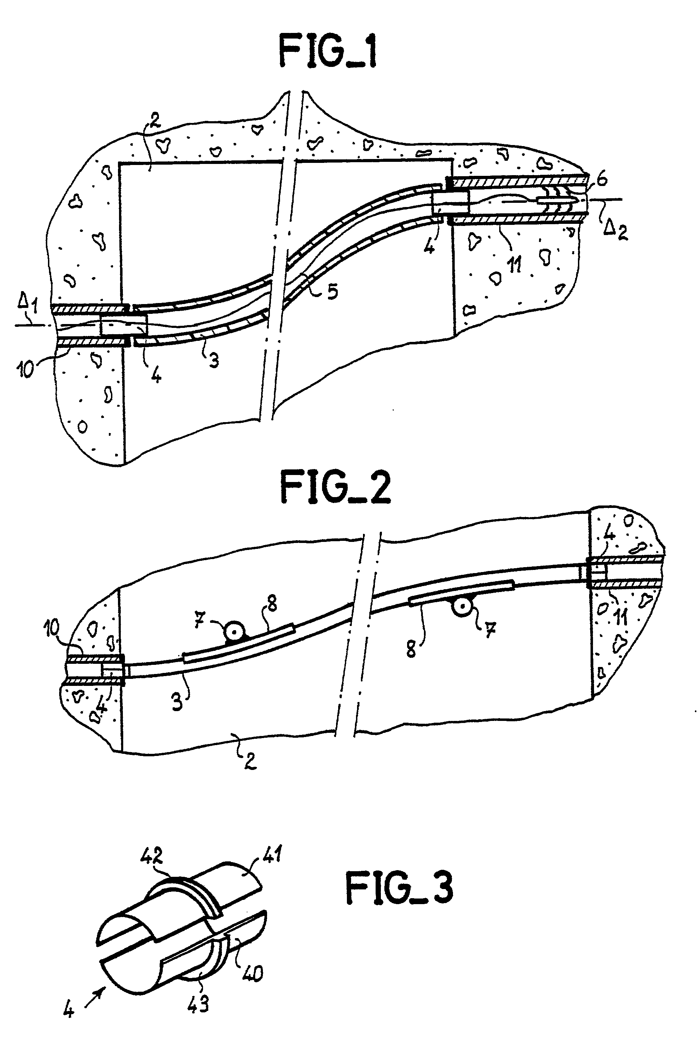

La figure 1 illustre les dispositions principales prises dans le cadre de cette variante d'exécution.

Sur cette figure, il est représenté une chambre 2 d'accès au réseau câblé faisant la jonction entre deux tronçons successifs 10 et 11 du fourreau de pose de câble et de protection du câble une fois posé. Ceux-ci débouchent dans la chambre 2 à des niveaux quelconques. De même, les régions terminales sont parallèles à des axes $\Delta_1$ et $\Delta_2$ qui ne sont pas forcément alignés.

Le problème que vise à résoudre l'invention est, d'une part, d'assurer une continuité de cheminement entre les deux tronçons 10 et 11, en général non alignés, et, d'autre part, selon les variantes préférées, d'assurer un cheminement étanche à l'air comprimé pour conserver le niveau de pression nécessaire et permettre l'avance pneumatique d'un furet 6 muni de jupes traînant un filin 5, pendant la première phase de pose d'un câble qui a été appelée aiguillage.

La première exigence, de continuité simple, permet la réalisation de toute fonction de guidage, que ce soit du furet, du filin de tirage du câble ou du câble à poser proprement dit.

Selon la caractéristique la plus importante de l'invention, la continuité de cheminement est assurée par la mise en oeuvre d'un tube flexible 3, en matériau plastique de préférence, par exemple du PVC.

Celui-ci pourra donc assurer un cheminement à courbures douces, du fait de son élasticité, entre les embouchures des fourreaux quelle que soit la géométrie du tracé à réaliser. La longueur du tube est choisie pour assurer ce tracé optimisé.

Le maintien en place au niveau des embouchures des fourreaux 10 et 11 peut être réalisé de façon avantageuse en faisant appel à deux manchons cylindrique 4 chacun constitués selon la figure 3 de deux demi-coquilles 40 et 41 amovibles. Celles-ci comportent chacune une bague extérieure, 42 et 43 respectivement, à flancs plats.

Le diamètre extérieur du manchon doit être ajusté au diamètre interne des fourreaux 10 et 11 et au diamètre interne du tube flexible 3.

Si le tube flexible 3 est plein, comme représenté sur la figure 1, le fait d'avoir recours à ces manchons permet également d'assurer l'étanchéité. Celle-ci peut être renforcée, en cas de besoin, par des colliers (non représentés) de serrage du tube 3 sur les manchons 4. Les bagues extérieures permettent de plaquer l'ensemble sur les parois de la chambre 2 au niveau des embouchures des fourreaux 10 et 11.

Il peut être nécessaire d'assurer un maintien dans l'espace du chemin de câblage ainsi reconstitué.

Pour ce faire, on utilise des supports disposés le long du chemin de câblage à base de sections 8 de tubes à section circulaire coudés en demi-lunes et représentés figure 2. Celles-ci forment réceptacles pour le tube flexible 3. Le diamètre du tube formant ces demi-lunes doit naturellement être adapté à celui du tube flexible, sans que cela soit critique d'ailleurs.

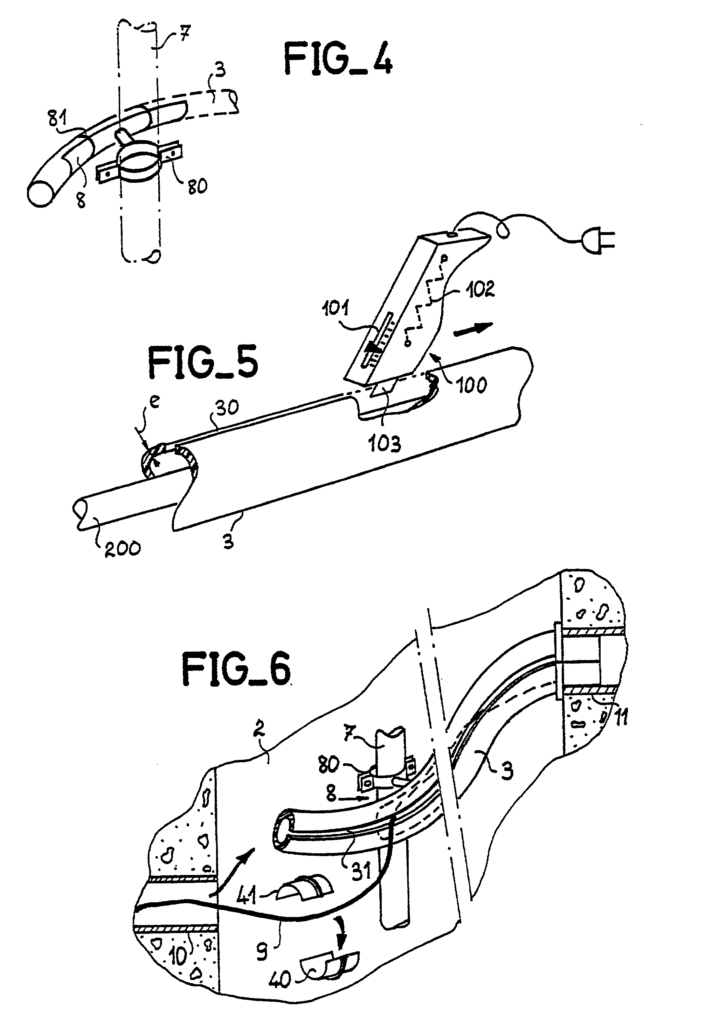

Ces demi-lunes sont supportées par des vérins 7 auxquelles elles sont liées par un moyen de fixation réglable, par exemple un collier 80 représenté figure 4. Ces derniers permettent de régler la hauteur de la fixation sur le vérin. Enfin le tube flexible 3 peut être maintenue à ces demi-lunes à l'aide de liens provisoires 81 représentés figure 4.

Une continuité étanche entre les fourreaux de deux sections successives est donc ainsi réalisée, en ne faisant appel qu'à des moyens simples et peu coûteux, d'une grande souplesse d'emploi. Il suffit que les courbures imposées au tube flexible 3 soient compatibles avec son élasticité et ne créent pas de risques de blocage des éléments aiguillés ou tirés à l'intérieur des fourreaux 10 et 11, et du tube souple 3.

Lorsque les différentes opérations à réaliser sont effectuées, il reste à dégager le tube flexible 3 et ses accessoires de fixation. Les éléments, films ou câbles, transmis du fourreau 10 au fourreau 11 via le tube 3 empêchent naturellement cette opération.

Selon le procédé de l'invention, il suffit pour cela de détruire le tube. Pour ce faire, toute solution appropriée telle que découpage ou sciage peut être mise en oeuvre.

Il est cependant nécessaire de prendre la précaution de n'entamer ce tube que sur une profondeur correspondant sensiblement à l'épaisseur e de sa paroi.

Si l'on procède par découpage, on peut utiliser un outil du type décrit schématiquement sur la figure 5. Cet outil représenté sous la forme d'un couteau 100 à lame 103 rétractable et dont la profondeur de coupe peut être déterminée à l'aide d'un moyen de réglage 101. Cet outil peut comprendre des moyens de chauffage de la lame, symbolisés sur la figure par une résistance chauffante 102. Tout autre moyen peut naturellement être prévu. Ceci permet, par exemple pour un tube en matière plastique, c'est-à-dire thermodégradable, de faciliter le travail de découpe 30.

Les moyens de réglage de la profondeur de coupe permettent donc d'effectuer celle-ci sans risque de détérioration des éléments à l'intérieur du tube 3, en particulier s'il s'agit d'un câble 200 de transmission d'informations comportant des fibres optiques qui sont en général disposées près de a périphérie de dénudage des conducteurs. Pour les câbles plus classiques, on évite le risque de dénudage des conducteurs.

A part le tube souple, élément en matériau bon marché, les autres éléments du dispositif selon l'invention, y compris les manchons 4 qui sont constitués de demi-coquilles 40 et 41, peuvent être naturellement récupérés pour un usage ultérieur.

Dans certaines applications, l'étanchéité n'est pas requise. Dans ce cas, le tube souple 3 peut être constitué par un tube fendu longitudinalement. Seule la fonction guidage est alors assurée.

Un dispositif pour la mise en oeuvre de cette variante du procédé de l'invention est représentée schématiquement sur la figure 6.

Les éléments communs avec ceux décrits en relation avec les figures précédentes portent la même référence et ne seront plus redécrits.

La différence essentielle entre les deux dispositifs est relative à la structure du tube flexible 3 qui comporte une fente longitudinale 31 sur toute sa longueur.

Une fois dégagées les extrémités des embouchures des fourreaux 10 et 11, l'élément transmis d'un fourreau à l'autre, par exemple du fourreau 10 au fourreau 11, peut être dégagé par cette fente. Il peut s'agir d'un câble de tirage 9 comme représenté sur la figure 6 ou du câble de transmission proprement dit.

La largeur de la fente 31 doit naturellement être suffisante pour permettre le dégagement sans être trop importante pour assurer un guidage sûr, quel que soit le tracé du chemin de pose dans la chambre 2.

Il y a d'ailleurs lieu de remarquer que l'élasticité du matériau constituant le tube permet un écartement des lèvres en vis-à-vis de la fente 31.

Sur la figure 6, l'extrémité du tube 3 en regard du fourreau 10 a été représentée dégagée de celui-ci ainsi que les demi-coquilles 40 et 41 associées.

**Revendications**

1. Procédé de pose de câble de transmission (200) dans des canalisations comportant deux tronçons distincts (10, 11) ayant leurs embouchures dans une chambre d'accès commune (2), le procédé comprenant au moins une étape de tirage d'un câble de transmission à l'aide d'un câble de tirage (9) à travers ces deux tronçons (10, 11); caractérisé en ce qu'il comprend une étape préliminaire à l'étape de tirage, de disposition d'un tube flexible (3) dans ladite chambre d'accès (2), ce tube ayant ses extrémités emboîtées chacune dans l'une des embouchures des tronçons (10, 11) de canalisation de manière à former un chemin de guidage continu entre ces embouchures et une étape de dépose du tube flexible (3) après l'étape de tirage.

2. Procédé selon la revendication 1, comprenant une étape supplémentaire de déplacement pneumatique de moyens de tirage (6) d'un câble de tirage (9) ou d'un câble de transmission (200) le long desdits deux tronçons (10, 11) de canalisation; caractérisé en ce qu'il comprend la sélection d'un tube flexible (3) paroi étanche de manière à former un chemin de guidage continu étanche entre les deux tronçons (10, 11) de canalisation permettant ledit déplacement pneumatique sans interruption et en ce que l'étape de dépose du tube flexible (3) comprend la formation d'au moins une saignée longitudinale (30) sur toute la longueur du tube flexible (3) permettant d'en dégager le câble de tirage (9) ou d'un câble de transmission (200) dans l'expace (2) compris entre les embouchures desdites deux sections (10, 11) de canalisation.

3. Procédé selon la revendication 2, caractérisé en ce que le tube (3) étant en matériau thermodégradable, ladite saignée (30) est réalisée à l'aide d'un outil (100) tranchant (103) muni de moyens de chauffage (102) pour obtenir cette thermodégradation et de moyen de réglage (101) de la profondeur de la saignée.

4. Procédé selon l'une quelconque des revendications 1 à 3, caractérisé en ce qu'il comprend une étape supplémentaire consistant en l'installation dans ladite chambre (2) de moyens supports (7, 8) mécaniquement solidarisés au tube flexible (3), répartis dans l'espace de manière à imposer au tube flexible (3) un cheminement continu à courbures déterminées dans la chambre d'accès (2).

5. Dispositif de mise en œuvre du procédé selon l'une quelconque des revendications 1 à 4, caractérisé en ce qu'il comprend un tube flexible (3) de longueur suffisante pour relier les embouchures desdits deux tronçons (10, 11) de canalisation, deux embouts (4) constitués chacun de deux demi-coquilles (40, 41) démontables, partiellement enfoncées à force dans le tube flexible (3), les parties non enfoncées étant ajustées pour pouvoir être emboîtées dans lesdites embouchures de façon étanche.

6. Dispositif selon la revendications 5, caractérisé en ce qu'il comprend en outre des moyens supports (7, 8) comprenant chacun, un vérin (7) et un moyen d'appui sur le tube flexible (3) constituée d'une section (8) de tube coudée en demi-lune formant réceptacle et des moyens de réglage (80) de la position des moyens d'appui (8).

7. Dispositif selon la revendication 5, caractérisé en ce que le tube (3) est un tube à paroi pleine.

8. Dispositif selon la revendication 5, caractérisé en ce que le tube (3) comporte une fente longitudinale (31) sur toute sa longueur de largeur prédéterminée.

9. Dispositif selon la revendication 5, caractérisé en ce que les manchons (4) sont constitués de deux demi-coquilles (40, 41) accolées comportant sur leurs parois extérieures, dans leurs parties médianes, des arêtes périphériques (42, 43) de séparation à flancs plats destinés à être accolés auxdites embouchures.

10. Dispositif selon l'une quelconque des revendications 5 à 9, caractérisé en ce que le tube flexible (3) est en matériau thermodégradable.

**Patentansprüche**

1. Verfahren zur Verlegung eines Übertragungskabels (200) in Kabelkanälen, die zwei getrennte Kanalabschnitte (10, 11) besitzen, die in eine gemeinsame Zutrittskammer (2) münden, wobei das Verfahren mindestens eine Phase des Ziehens eines Übertragungskabels durch die beiden Kanalabschnitte (10, 11) mit Hilfe eines Zugkabels (9) umfaßt, dadurch gekennzeichnet, daß es eine der Ziehphase vorausgehende Phase aufweist, in der ein flexibles Rohr (3) in der Zutrittskammer (2) angebracht wird, das mit seinen Enden jeweils in eine der Mündungen der Kanalabschnitte (10, 11) eingeschoben ist, derart, daß eine durchgehende Führungsbahn zwischen den Mündungen geschaffen wird, und daß das Verfahren eine Phase des Beseitigens des flexiblen Rohrs (3) nach der Verlegungsphase aufweist.

2. Verfahren nach Anspruch 1, mit einer zusätzlichen Phase der pneumatischen Fortbewegung von Zugmitteln (6) für ein Zugkabel (9) oder ein Übertragungskabel (200) durch die beiden Kanalabschnitte (10, 11), dadurch gekennzeichnet, daß ein flexibles Rohr (3) mit dichter Wandung gewählt wird, derart, daß eine durchgehende dichte Führungsbahn zwischen den beiden Kanalabschnitten (10, 11) geschaffen wird, die die pneumatische Förderung ohne Unterbrechung ermöglicht, und daß die Phase des Entfernens des flexiblen Rohrs (3) die Erzeugung mindestens eines Längsschlitzes (30) über die gesamte Länge des flexiblen Rohrs umfaßt, der die Entnahme des Zugkabels (9) oder eines Übertragungskabels (200) im Raum (2) zwischen den Mündungen der beiden Kanalabschnitte (10, 11) erlaubt.

3. Verfahren nach Anspruch 2, dadurch gekennzeichnet, daß das Rohr (3) aus einem thermisch abbaubaren Material besteht und der Schlitz (30) mit Hilfe eines schneidenden (103) Werkzeugs (100) erzeugt wird, das mit Heizmitteln (102) zur Herbeiführung des thermischen Abbaus und mit Mitteln zur Einstellung der Schlitztiefe versehen ist.

4. Verfahren nach einem der beliebigen Ansprüche 1 bis 3, dadurch gekennzeichnet, daß es eine weitere Phase umfaßt, die in der Installierung von Abstützmitteln (7, 8) in der Kammer (2) besteht, welche mechanisch mit dem flexiblen Rohr (3) verbunden sind und derart im Raum verteilt sind, daß sie dem flexiblen Rohr (3) in der Zutrittskammer (2) einen unterbrechungslosen bestimmten Kurvenverlauf verleihen.

5. Vorrichtung zur Durchführung des Verfahrens nach einem beliebigen der Ansprüche 1 bis 4, dadurch gekennzeichnet, daß es ein flexibles Rohr (3) von ausreichender Länge zur Verbindung der Mündungen der beiden Kanalabschnitte (10, 11) und zwei Schellen (4) aufweist, die je aus zwei demontierbaren Halbschalen (40, 41) bestehen, die teilweise in das flexible Rohr (3) mit Zwang eingetrieben sind, während die nicht eingetriebenen Partien so bemessen sind, daß sie dicht in die Mündungen eingeschoben werden können.

6. Vorrichtung nach Anspruch 5, dadurch gekennzeichnet, daß sie weiter Tragemittel (7, 8) aufweist, die je ein Hebeorgan (7) und ein Stützmittel für das flexible Rohr (3) umfassen, das aus einem halbmondförmig gebogenen Rohrabschnitt (8) besteht, der ein Aufnahmebehältnis bildet, und daß sie Mittel (80) zur Einregulierung der Position der Tragemittel (8) aufweist.

7. Vorrichtung nach Anspruch 5, dadurch gekennzeichnet, daß das Rohr (3) ein Rohr mit Vollwandung ist.

8. Vorrichtung nach Anspruch 5, dadurch gekennzeichnet, daß das Rohr (3) einen über seine gesamte Länge verlaufenden Längsschlitz (31) vorbestimmter Breite aufweist.

9. Vorrichtung nach Anspruch 5, dadurch gekennzeichnet, daß die Schellen (4) aus zwei zusammengefügten Halbschalen (40, 41) bestehen, die auf ihrer Außenfläche im mittleren Teil periphere Abstandsstege mit flachen Flanken aufweisen, welche zur Anlage an die Mündungen bestimmt sind.

10. Vorrichtung nach einem beliebigen der Ansprüche 5 bis 9, dadurch gekennzeichnet, daß das flexible Rohr (3) aus einem thermisch abbaubaren Material besteht.

**Claims**

1. A method of laying a transmission cable (200) in a duct including two distinct lengths (10, 11) having openings into a common access chamber (2), the method including at least one stage during which the transmission cable is pulled by means of a pulling rope (9) through both of the lengths (10, 11), the method being characterized in that it includes a step prior to the pulling step of disposing a flexible tube (3) in said access chamber (2), said flexible tube having its ends fitted into respective ones of the openings of the lengths of duct (10, 11) so as to form a continuous guide path between said openings, followed by a step during which the flexible tube (3) is removed after the cable has been pulled.

2. A method according to claim 1, including an additional step of pneumatically displacing means (6) for pulling a pull rope (9) or a transmission cable (200) along said two lengths of duct (10, 11) ; the method being characterized in that it comprises selecting a flexible tube (3) having an airtight wall so as to form a continuous airtight guide path between the two lengths of duct (10, 11) enabling said pneumatic displacement to take place without interruption, and in that the step of removing the flexible tube (3) includes forming at least one longitudinal cut (30) along the entire length of the flexible tube (3) enabling the pull rope (9) or a transmission cable (200) to be disengaged therefrom in the space (2) lying between the openings of said two sections of duct (10, 11).

3. A method according to claim 2, characterized in that the tube (3) is made of thermally degradable material, with said cut (30) being made by means of a cutting tool (100, 103) provided with heater means (102) for obtaining such thermal degradation, and also with means (101) for adjusting the depth of the cut.

4. A method according to any one of claims 1 to 3, characterized in that it includes an additional step consisting in installing support means (7, 8) in said chamber (2), said support means being mechanically fixed to the flexible tube (3) and being disposed in three dimensions in such a manner as to impose continuous tracking with given curvature to the flexible tube (3) inside the access chamber (2).

5. Apparatus for implementing the method of any one of claims 1 to 4, characterized in that it comprises a flexible tube (3) of sufficient length to interconnect the openings of said two lengths of duct (10, 11), two end fittings (4) each constituted by two disassemblable half-shells (40, 41) which are partially force-fitted inside the flexible tube (3), with the portions that are not force-fitted into the tube being adjusted so as to be suitable for being received in said openings in airtight manner.

6. Apparatus according to claim 5, characterized in that it further includes support means (7, 8) each comprising an actuator (7) and means for bearing against the flexible tube (3) and constituted by a half-moon section (8) of tube forming a receptacle together with means (80) for adjusting the position of the bearing means (8).

7. Apparatus according to claim 5, characterized in that the tube (3) is a solid-walled tube.

8. Apparatus according to claim 5, characterized in that the tube (3) includes a longitudinal slot (31) over its entire length and over a predetermined width.

9. Apparatus according to claim 5, characterized in that the sleeves (4) are constituted by two half-shells (40, 41) connected to each other and including peripheral separating ribs (42, 43) projecting from the outsides of their middle portions and having flat sides intended to be pressed against said openings.

10. Apparatus according to any one of claims 5 to 9, characterized in that the flexible tube (3) is made of a thermally degradable material.

# FIG_1

# FIG_2

# FIG_3

FIG_4

81

7

3

8

80

FIG_5

101

102

100

e

30

103

200

3

FIG_6

2

7

80

8

31

41

9

10

40

3

11